# FASCICULE DE BREVET EUROPEEN

(11) **EP 3 468 347 B1**
(45) Date de publication et mention de la délivrance du brevet: **31.03.2021**
(21) Numéro de dépôt: 17730776.6
(22) Date de dépôt: 14.06.2017
(51) Int. Cl.: A01G 31/04

(54) **INSTALLATION POUR LA CULTURE HORS SOL**
ANLAGE FÜR EINEN ERDELOSEN ANBAU
SOILLESS CULTURE INSTALLATION

(30) Priorité: 14.06.2016 FR 1655496
(43) Date de publication de la demande: 17.04.2019
(73) Titulaire: Combagroup, 1415 Molondin (CH)
(72) Inventeur: DE COMBAUD, Benoit, 1410 Saint Cierges (CH)
(74) Mandataire: IP Trust
(86) Numéro de dépôt international: PCT/EP2017/064631
(87) Numéro de publication internationale: WO 2017/216267

(56) Documents cités:
- JP-B2- 3 480 279
- NL-A- 8 401 638
- NL-A- 8 503 000
- US-A- 4 166 341
- US-A- 5 323 567
- US-A1- 2012 124 907
- US-A1- 2013 014 435

## Description

### Domaine de l'invention

La présente invention concerne le domaine de la culture hors sol, en hydroponie et selon une variante particulière en aéroponie.

Pour ce type de culture, les plantes se développent sur un substrat neutre et inerte (de type sable, pouzzolane, billes d'argile, laine de roche etc.). Ce substrat et le système radiculaire de la plante sont régulièrement irrigué d'un courant de solution qui apporte des sels minéraux et des nutriments essentiels à la plante, apporté par trempage pour la culture en hydroponie et par brumisation sur les racines pour la culture en aéroponie.

La culture en aéroponie est plus complexe à mettre en œuvre, mais permet un meilleur apport en oxygène auprès des racines et prévient naturellement le risque de contamination croisé par contact racinaire

De nombreuses configurations d'installation de culture ont été proposées. L'invention concerne plus particulièrement les installations comportant une étendue de culture à plat, permettant d'assurer un ensoleillement naturel, contrairement aux solutions tridimensionnelles ou multi-étages.

### Etat de la technique

On connaît dans l'état de la technique le brevet français FR3024816 de la demanderesse. Ce brevet décrit une installation pour la culture hors sol, comprenant une pluralité de systèmes juxtaposés assurant chacun le déplacement de végétaux sur une ligne de production. Les systèmes de déplacement de végétaux sont configurés pour assurer le déplacement d'un végétal entre une extrémité d'alimentation de ladite ligne de production et une extrémité de prélèvement de ladite ligne de production, pendant une durée correspondant à la durée de maturation dudit végétal, et pour modifier la distance entre deux végétaux consécutifs selon au moins l'un des axes longitudinal ou transversal sur une partie au moins de ladite ligne de production.

On connaît aussi le brevet américain US5323567 qui concerne une installation de culture de plantes utilisant une source de lumière artificielle. Des cloisons ayant une réflectance lumineuse élevée sont disposées dans une zone de culture pour diviser la zone de culture en petits espaces. Dans chaque petit espace, une plaque réfléchie la lumière.

Des ensembles de palettes portant des plantes sont disposés en rangées dans une chambre de croissance et sont déplacées dans une direction radiale en fonction de la croissance des plantes. La surface périphérique de la chambre de croissance est recouverte d'une plaque réfléchissante ayant une forte réflexion lumineuse.

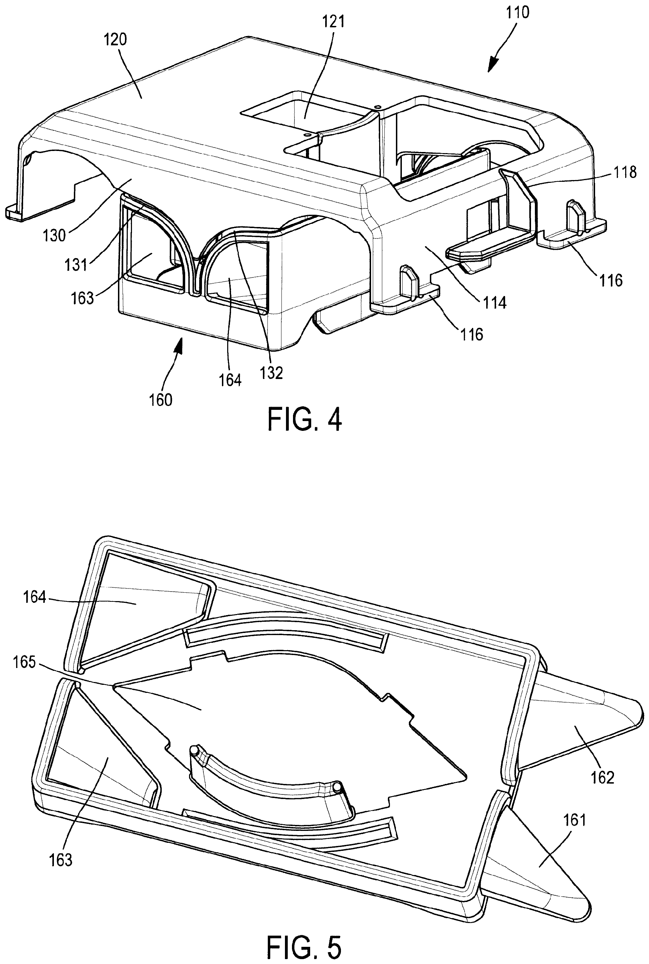

La demande de brevet néerlandaise NL8401638 décrit une gouttière en matière plastique fermée à ses côtés avant et arrière pour la culture de plantes sur un milieu de culture aqueux. Les plants sont insérées dans un bloc de mousse qui est engagé dans une gorge dans laquelle ils sont maintenus, dans la variante illustrée par la figure 5, par des pattes de verrouillage élastiques 21.

On connaît aussi la demande de brevet US2013/014435 décrit un système de culture de plantes hors sol utilisant des paniers amovibles en forme de V pour soutenir les plantes dans une unité autonome étagée. L'eau enrichie en éléments nutritifs est pulvérisée sur les racines de la plante. Les racines sont maintenues par des perforations dans le panier en forme de V allongé et une couverture de plante.

Les paniers peuvent être composés d'une paire de moitiés identiques qui peuvent être mutuellement couplées mutuellement. Les mécanismes de couplage peuvent inclure ceux qui se combinent et ceux qui prévoient un couplage pivotant.

### Inconvénients de l'art antérieur

Les solutions de l'art antérieur sont globalement satisfaisantes. Toutefois, dans un usage industriel réel, elles peuvent présenter des manques de résistance et de fiabilité.

En effet, il s'agit d'installations destinées à fonctionner 24 heures sur 24, 7 jours sur 7, et pendant toute l'année, dans des conditions éprouvantes pour les mécanismes : ambiance humide, température, UV, cycles végétaux, etc...

L'architecture générale de l'installation, la conception des composants et des mécanismes doit donc résister à ces conditions de fonctionnement avec un minimum de défaillances et un besoin de maintenance et de supervision le plus réduit possible.

Par ailleurs, il est important de séparer au mieux l'espace supérieur où se développe la partie aérienne de la plante, et la partie inférieure, où se trouve le système radiculaire et les équipements d'irrigation ou de brumisation. Cette séparation doit être à la fois physique, en assurant non pas une étanchéité parfaite mais une barrière limitant échanges entre les deux espaces et également optique pour limiter l'éclairage de la partie inférieure. En effet, l'apport de lumière dans la partie inférieure favorise le développement de micro-algues et de pathogènes.

Les documents de l'art antérieur n'apportent aucune solution au problème concernant l'étanchéité entre la partie supérieure et la partie inférieure. Au contraire, pour le brevet US5323567, même dans la réalisation proposée en référence aux figure 20 et suivantes, la fente permettant le passage des palettes recevant les plants constitue un passage pour la lumière et les éléments matériels.

La solution décrite dans le brevet NL8401638 ne prévoit pas le déplacement de supports de plans tout au long du profilé, mais au contraire prévoit le verrouillage du support dans une position figée. Les lèves référées (21) n'ont pas de fonction d'étanchéification mais de verrouillage des blocs dans lesquels sont insérés les plants. D'ailleurs, la forme des blocs ne permettrait aucunement d'assurer l'étanchéité puisque les zones situées devant et derrière le bloc sont nécessairement entre-ouvertes.

### Solution apportée par l'invention

La présente invention vise à apporter une solution à ces problèmes techniques en proposant, selon son acception la plus générale, une installation pour la culture hors sol à conforme à la revendication 1.

L'invention concerne aussi les supports pour de telles installations selon la revendication 13.

### Description détaillée d'un exemple non limitatif de l'invention

La présente invention sera mieux comprise à la lecture de la description détaillée d'un exemple non limitatif de l'invention qui suit, se référant aux dessins annexés où :
- la figure 1 présente une vue en perspective d'une installation selon l'invention
- la figure 2 représente une vue en coupe transversale d'un profilé mise en œuvre par l'invention
- la figure 3 représente une vue en coupe transversale d'un support et d'un boîtier d'entraînement
- la figure 4 représente une vue en perspective dessus-arrière du support
- la figure 5 représente une vue de dessous de la coque inférieure du support
- les figures 6 et 7 représentent des vues respectivement de dessous et de dessus de la coque supérieure du support
- les figures 8 et 9 représentent des vues du boîtier d'entraînement respectivement en position active et en position d'inhibition.
- la figure 10 représente une vue en perspective des moyens d'entraînement des supports.

### Description générale

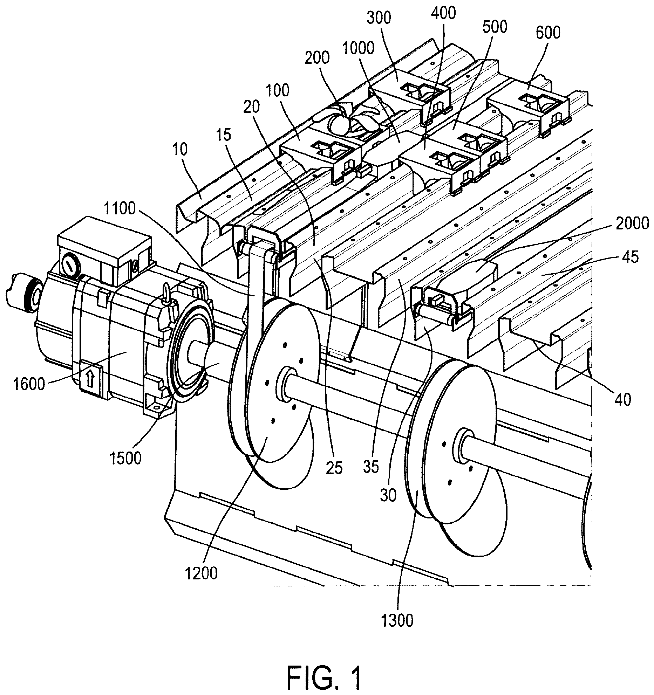

La figure 1 représente une vue schématique partielle d'un exemple d'installation selon l'invention.

Elle est constituée par un faisceau de profilés (10, 20, 30, 40) parallèles, s'étendant dans un plan horizontal entre une zone transversale de chargement, jusqu'à une zone transversale de récolte. Ces profilés définissent un plan séparant l'espace supérieur, éclairé par la lumière naturelle ou artificielle, et dans lequel se développe la partie aérienne des plantes mises en culture, et l'espace inférieur, équipé des moyens d'irrigation en cas de culture en hydroponie ou des moyens de brumisation en cas de culture aéroponique, cet espace inférieur étant dans l'obscurité pour limiter la prolifération des micro-organismes, notamment micro-algues.

Les profilés sont espacés deux à deux pour définir un interstice (15, 25, 35, 45) pour le déplacement de supports (100, 200, 300, 400, 500, 600). Des boîtiers d'entrainement (1000, 2000) entraînés par des sangles (1100) glissent sur la surface du profilé pour entraîner les supports (100, 200, 300, 400, 500, 600) depuis la zone de chargement jusqu'à la zone de récolte pendant un cycle correspondant à la maturation de la plante. Ce déplacement a pour but non seulement d'amener les supports depuis la zone de chargement jusqu'à la zone de récolte pendant un cycle correspondant à la durée de croissance, mais aussi d'augmenter l'espacement entre deux supports consécutifs d'une même ligne, au fur et à mesure de l'augmentation du volume de la partie aérienne de la plante. Pour des plantes de type salade, l'espace occupé par les feuilles augmente depuis une dimension nulle lorsque le support contient une graine, jusqu'à un feuillage occupant un espace de plusieurs dizaines de centimètres de diamètre au moment de la récolte.

Typiquement, la longueur des profilés est comprise entre 60 et 120 mètres, et généralement de 90 mètres, pour permettre le chargement d'une dizaine de supports simultanés, avec des stades de maturation progressifs.

L'installation comprend coté chargement et coté récolte, un arbre motorisé transversal (1500) entrainé par un moteur (1600). Cet arbre motorisé (1500) est équipé de tambours (1200, 1300) entraînant les sangles (1100). Eventuellement, chaque tambour (1200, 1300) comprend un moyen d'embrayage permettant l'accouplement ou le désaccouplement avec l'arbre motorisé (1500), et donc de déplacer de manière individualisé chacun des boîtiers d'entraînement (1000, 2000).

### Description détaillée du profilé

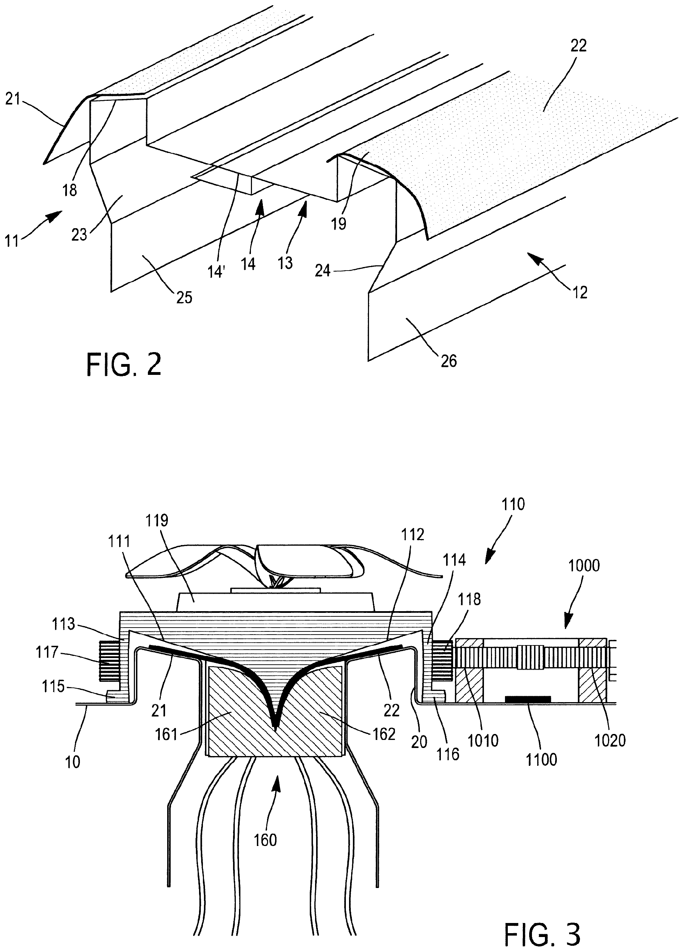

La figure 2 représente une vue en coupe transversale d'un profilé selon l'invention.

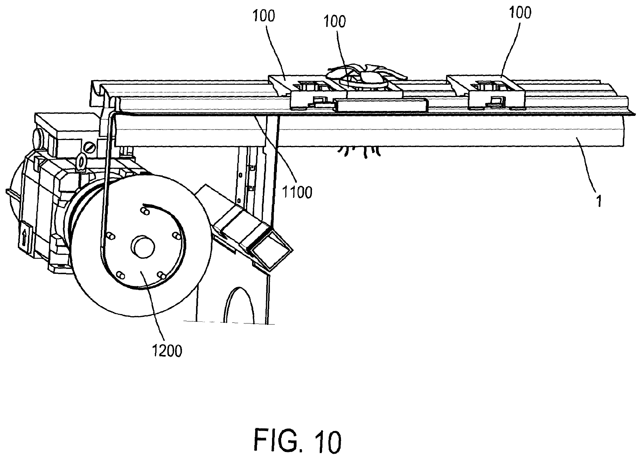

La figure 10 représente une vue en perspective des moyens d'entraînement des supports

Il est réalisé de préférence en acier galvanisé recouvert d'un double ou triple revêtement (« coating ») plastique et formé sur place.

Le profilé (10) présente deux flancs latéraux (11, 12) de part et d'autre d'une face supérieure transversale (13).

La face supérieure présente une rainure (14) dans laquelle se déplace le boîtier d'entraînement (1000). Optionnellement, le fond de cette rainure (14) présente une seconde rainure (14') de section trapézoïdale pour le guidage longitudinal et vertical du boîtier d'entrainement (1000), qui présente alors un sabot de section complémentaire venant s'engager dans cette seconde rainure (14').

De part et d'autre de la zone de guidage du dispositif d'entraînement, la rainure (14) présente une zone de glissement de patins prévus sur des extensions latérales des supports (100).

De part et d'autre de la rainure centrale (14) le profilé présente une surface inclinée (18, 19) d'environ 10° par rapport au plan horizontale sur lequel sont fixées des joints respectivement (21, 22).

Ces joints sont constitués de bandes de silicone opaque d'une épaisseur d'environ 2 à 5 millimètres, fixés sur la surface inclinée (18, 19) par des rivets ou des systèmes d'ancrage, avec une extension de 4 à 10% de la longueur nominale. Ces bandes (21, 22) présentent une flexibilité élastique et elles retombent au repos pour former un angle d'une dizaine de degré avec le plan vertical.

Lorsque deux profilés sont en place, ils définissent un interstice dans lequel les joints respectifs viennent se rejoindre à leurs bords inférieurs pour présenter une section transversale en «V » au repos. L'inclinaison de la partie inférieure des bandes (21, 22) est déterminée pour que les bords inférieurs se rejoignent, lorsque les profilés sont écartés de la largeur nominale des interstices.

Par déformation élastiques, il est possible de repousser localement le joint (21, 22) pour qu'il se rapproche du flanc correspondant respectivement (11, 12), par exemple lors de la présence d'un support (100), et revienne en position du fait de son élasticité.

Ces joints (21, 22) assurent la fermeture des interstices formées entre deux profilés consécutives sir toute la longueur qui n'est pas occupée par un support mobile.

Les flancs latéraux (11, 12) présentent une partie (23, 25) inclinée vers l'intérieur du profilé, pour dégager de l'espace pour le déploiement des racines des plantes déplacées dans les supports. Cette partie inclinée (23, 25) se prolonge dans l'exemple décrit par une partie verticale (24, 26) qui vient reposer à intervalles réguliers sur des potences fixées au sol.

### Description détaillée du support et du boîtier d'entraînement

La figure 3 représente une vue en coupe tranversale d'un support (100) et d'un boîtier d'entraînement (1000), à un moment où les deux sont accouplés. Les figures 4 à 7 présentent les détails de réalisation du support.

Le support (100) est constitué par l'assemblage d'une coque supérieure (110) avec une coque inférieure (160). Ces coques (110, 160) sont en plastique moulé et réunies par clipsage.

La coque inférieure (160) présente deux prolongements avant (161, 162) en forme d'un quart d'ogive.

La coque supérieure (110) présente sur sa face avant une découpe (111, 112) de forme complémentaire à la surface transversale des prolongements (161, 162) pour définir une fente pour le passage des joints (21, 22).

La forme semi-ogivale des prolongements avant (161, 162) permet de forcer la déformation des joints entre une configuration où les deux joints en contact présente une configuration en « V », devant le support vers une forme où ils viennent s'écarter pour permettre le passage du logement de la plante et de la partie radiculaire, avant de retrouver la configuration en « V ».

La coque supérieur (110) présente des extensions latérales (113, 114) délimitant un canal de section complémentaire à la bordure latérale du profilé. Ces extensions latérales (113, 114) présentent à leur extrémité inférieure un patin (115, 116) destinée à glisser sur la surface supérieure du profilé (10, 20).

Ces extensions latérales (113, 114) sont pourvues d'épaulement (117, 118) destiné à coopérer avec le doigt (1010, 1020) du boitier d'entraînement (1000). Ce boîtier (1000) est entrainé par la courroie (1100).

La coque supérieure (110) présente un logement pour recevoir un godet (119) contenant le substrat de croissance.

La figure 4 représente une vue de dessus-arrière du support. Il présente à sa face supérieure (120) un logement (121) pour recevoir le substrat de culture.

La coque inférieure présente deux logements longitudinaux de forme intérieure semi-ogivale (163, 164) complémentaire de la forme extérieure des prolongements avant (161, 162). Cela permet l'emboitement de ces zones et le gerbage de deux coques inférieures consécutives, dans la zone de chargement où il n'est pas encore nécessaire d'espacer les supports.

La coque supérieure (110) présente une face arrière (130) présentant comme la face avant des bords inférieurs arqués (131, 132) pour former avec la coque inférieure (160) une fente de passage des joints (21, 22).

La fente arquée définie par les bords adjacents assure également une fonction de nettoyage des bandes de jointures en raclant les dépôts formés à leurs surfaces.

La coque inférieure représentée en figure 5 présente une ouverture (165) de section supérieure au logement destiné à recevoir le substrat, de façon à faciliter le passage des racines lorsque la plante à atteinte sa taille mature, par exemple lorsque l'on veut séparer la coque inférieur (160) et la coque supérieure (110) entourant la plante.

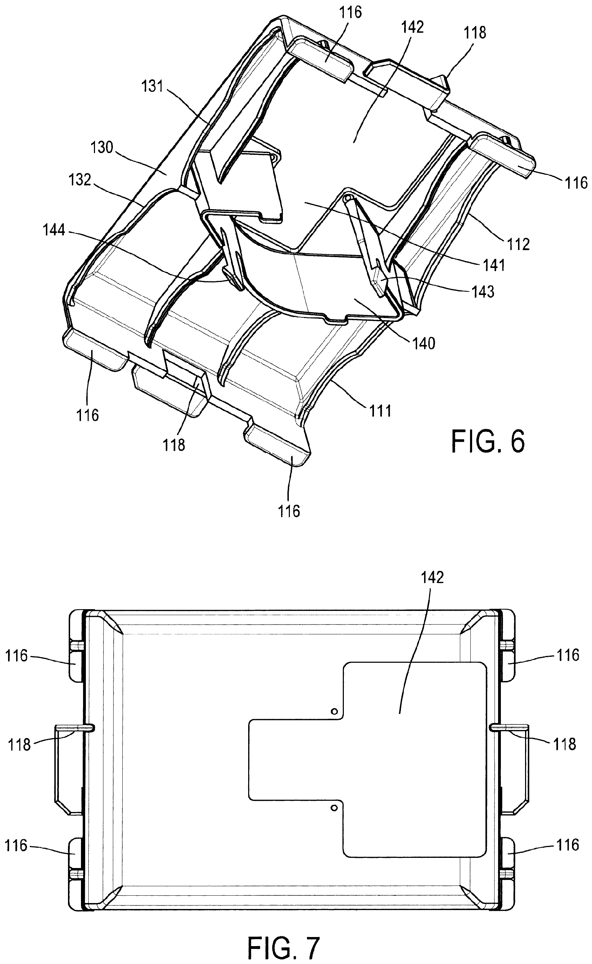

La coque supérieure (110) représenté en figure 6 présente un logement (140) semi-cylindrique s'ouvrant par un passage (141) en direction d'une ouverture élargie (142) s'ouvrant dans la face supérieure. Ce logement (140) présente du coté inférieur des crochets (143, 144) permettant l'enclipsage dans la partie inférieure (160).

### Boitier d'entrainement

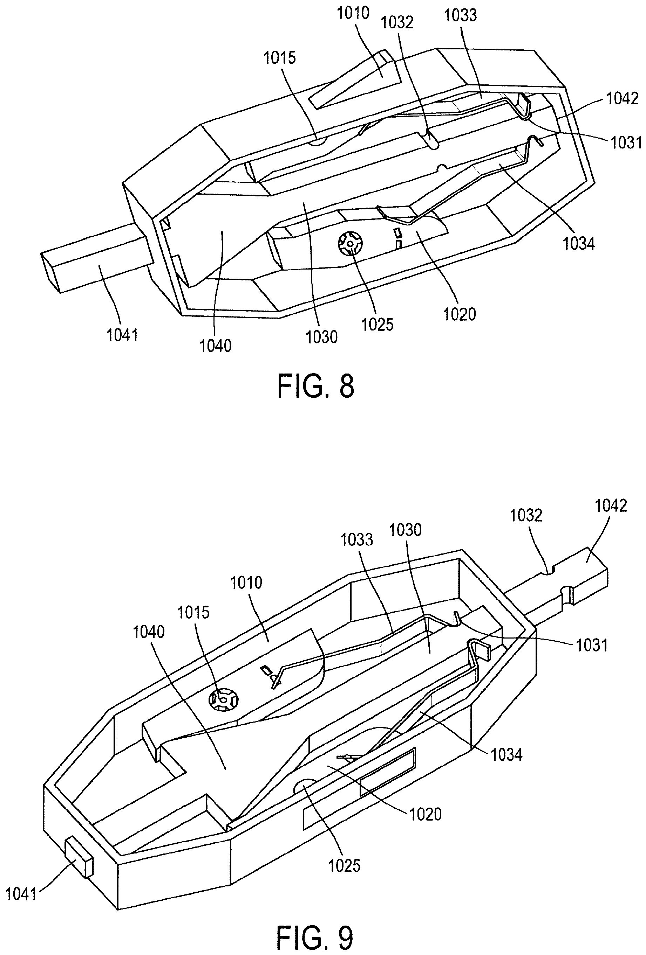

Les figures 8 et 9 représentent des vues du boîtier d'entraînement respectivement en position active et en position d'inhibition.

Le boitier comprend deux doigts (1010, 1020) articulés par des pivots (1015, 1025). Le boitier présente une tige longitudinale (1030) dépassant les deux parois frontales avant et arrière du boîtier. Cette longitudinale (1030) présente une zone triangulaire (1040) qui provoque la rentrée des doigts (1010, 1020) dans l'une des position, et libère le débattement des doigts (1010, 1020) dans l'autre position.

La tige longitudinale (1030) présente deux cannelures périphériques (1031, 1032) dans lequel vient s'enclencher l'extrémité de ressorts (1033, 1034).

Lorsque l'extrémité (1041), qui est du coté le plus large de la zone triangulaire (1040) et du coté avant, en considérant le sens de déplacement des supports, vient en contact avec une butée prévue dans la zone de récolte, il est déplacé par rapport au boitier. La zone triangulaire (1040) vient alors provoqué la rentrée des doigts (1010, 1020). L'extrémité recourbée des ressorts (1033, 1034) vient se loger dans la cannelure (1032), et la tige (1030) est maintenue en position d'inhibition, jusqu'à ce que l'extrémité opposée (1042) vient en contact d'une butée prévue dans la zone de chargement. La tige (1030) est alors repoussée dans la direction inverse, et la zone triangulaire (1040) libère les doigts (1010, 1020). La tige est à nouveau maintenue dans cette nouvelle position par l'extrémité recourbée des ressorts (1033, 1034) qui vient se loger dans la cannelure (1031).

Ce système permet d'assurer la fonction d'entraînement des supports pendant le cycle de déplacement des supports depuis la zone de chargement jusqu'à la zone de récolte, puis de réinitialiser le déplacement du moyen d'entraînement en le ramenant du coté de la zone de récolte sans qu'il n'interagisse, pendant ce déplacement, avec les supports qu'il rencontre.

### Fonctionnement

Le fonctionnement de l'installation est le suivant.

On commence par charger des supports contenant une graine dans un substrat en plaçant le support dans l'interstice prévu entre deux profilés. A cet effet, les profilés présentent une extrémité correspondant à la zone de chargement dépourvue de joint. Les supports peuvent être resserrés dans cette zone de chargement, par gerbage des zones ogivales.

Le boitier d'entrainement se déplace par va et vient pour entraîner, par petits sauts, les supports d'une même ligne. Le boîtier d'entrainement par de la zone de récolte, vient accrocher le support le plus avancé (le plus proche de la zone de chargement), change de sens de déplacement pour l'entraîner un peu plus en avant, puis se déplace de nouveau vers la zone de chargement pour accrocher le support suivant, puis change à nouveau de sens pour entraîner ce support d'un saut en avant, et ainsi de suite. Lorsque le boîtier arrive en fin de course dans la zone de chargement, le mécanisme d'inhibition provoque la rentrée des doigts, et le boitier peut être ramené dans la zone de culture pour recommencer un cycle de déplacement.

L'entrainement des boîtiers se fait par des courroies entraînées par un arbre motorisé moteur et un arbre motorisé esclave à l'autre extrémité, ce dernier commandant la tension et déplacement des courroies.

Le support présente un marquage sous forme de QRcode, code barre, marquage couleur ou RFID. Ce marquage permet d'assurer la traçabilité depuis le chargement du substrat contenant la semence jusqu'à son installation sur le profilé. L'installation comprend des lecteurs pour la reconnaissance du code et le traitement pour commander son fonctionnement, par exemple la durée du cycle en fonction de la semence, ou encore l'arrêt du fonctionnement dans le cas d'une semence non reconnue ou non inscrite au catalogue des semences.

### Variante

L'invention n'est pas limitée aux exemples susvisés.

En particulier,
- les sangles (1100) peuvent être constituées par des bandes tissées ou par une bande en inox percé (clinquant)
- l'entraînement des sangles (1100) peut être réalisée soit par un moteur principal et un moteur esclave, ou par un moteur unique, et un système de renvoi vers l'extrémité opposé par exemple par un arbre de transmission ou une courroie.

## Revendications

1. Installation pour la culture hors sol constituée par un bâti supportant une pluralité de profilés (10, 20, 30) s'étendant parallèlement dans un plan horizontal, depuis une zone transversale de chargement jusqu'à une zone transversale de récolte et par une pluralité de supports aptes à recevoir chacun un substrat de culture, lesdits supports (10, 20, 30) étant mobiles longitudinalement dans l'interstice longitudinal (15, 25) défini par deux profilés adjacents (10, 20), les supports (100) étant entraînés par un moyen motorisé susceptible de modifier la distance entre deux supports (100, 200) consécutifs pendant la course dans ledit interstice (15),**caractérisée en ce que** lesdits profilés (10, 20) présentent des bandes latérales de jointure (21, 22) longitudinales souples opaques, les bandes de jointure (21, 22) de deux profilés (10, 20) adjacents se rejoignant pour assurer une fermeture de l'interstice (15) définis par lesdits profilés (10, 20) adjacents, et **en ce que** lesdits supports mobiles (100, 200) présentent dans leurs sections transversales avant et arrière des fentes arquées, de part et d'autre d'un plan vertical longitudinal, les deux fentes se rejoignant au niveau de leur bord inférieur.

2. Installation pour la culture hors sol selon la revendication 1 **caractérisée en ce que** lesdites fentes s'étendant depuis le bord latéral selon une direction formant un angle compris entre 0 et 30° par rapport au plan horizontal, jusqu'au bord inférieur selon une direction formant un angle compris entre 0 et 30° avec le plan médian vertical.

3. Installation pour la culture hors sol selon la revendication 1 **caractérisée en ce que** le bord inférieur des bandes de jointure présente un moyen de fermeture magnétique.

4. Installation pour la culture hors sol selon la revendication 1 **caractérisée en ce que** ledit profilé (10, 20) présente une zone longitudinale centrale (14) délimitée de part et d'autre par des épaulement longitudinaux, lesdits supports présentant de part et d'autre du plan longitudinal vertical médian des extensions définissant un canal longitudinal de section complémentaire à la section desdits épaulements longitudinaux.

5. Installation pour la culture hors sol selon la revendication 1 **caractérisée en ce que** chaque profilé (10) assure le guidage d'un boitier d'entrainement (1000) présentant des moyens d'accouplements (1010, 1020) avec les supports mobiles (100, 200) adjacents, chacun desdits boîtiers (1000) étant déplacés par une courroie (1100) s'étendant le long du profilé (10) correspondant.

6. Installation pour la culture hors sol selon la revendication 1 **caractérisée en ce que** ledit support mobile présente des patins latéraux (116), de part et d'autre du plan vertical médian, la surface inférieure desdits patins (116) étant destinée à glisser sur la surface supérieure desdits profilés (10).

7. Installation pour la culture hors sol selon la revendication 1 **caractérisée en ce que** chaque profilé (10) présente une nervure longitudinale médiane (14) pour recevoir une sangle (1100) et le boîtier d'entrainement (1000) associé, et **en ce que** lesdits moyens d'accouplement sont constitués par des doigts escamotables (1010, 1020) venant en contact avec un épaulement (118) prévu sur la paroi latérale (114) desdits supports mobiles.

8. Installation pour la culture hors sol selon la revendication précédente **caractérisée en ce que** lesdits doigts escamotables (1010, 1020) sont configurés pour être repoussés en position retirée lorsqu'ils viennent en contact avec la paroi d'un support lors d'un déplacement en direction de la zone de chargement de l'installation.

9. Installation pour la culture hors sol selon la revendication 7 ou 8 **caractérisée en ce que** lesdits boîtiers d'entraînement comportent un organe d'inhibition (1030, 1040) verrouillant les doigts (1010, 1020) du boîtier de déplacement (1000) en position retirée lorsque ledit organe d'inhibition vient en contact avec une butée située dans la zone de chargement, et libérant lesdits doigts (1010, 1020) lorsque ledit organe d'inhibition vient en contact avec une butée située dans la zone de récolte.

10. Installation pour la culture hors sol selon la revendication 1 **caractérisée en ce qu'**elle comprend du coté de la zone de chargement un premier axe motorisé entraînant pour chaque profilé un tambour d'enroulement d'une sangle dont l'extrémité opposée est fixée sur le boîtier d'entraînement, et du coté de la zone de récolte un deuxième axe motorisé entraînant pour chaque profilé un tambour d'enroulement d'une sangle dont l'extrémité opposée est fixée sur le boîtier d'entrainement.

11. Installation pour la culture hors sol selon la revendication précédente **caractérisée en ce qu'**elle comporte un calculateur pour commander le déplacement des axes motorisés de manière séquentielle pour déplacer, pendant un cycle de culture, les boîtiers d'entraînement depuis la zone transversale de récolte jusqu'à la zone transversale de chargement, avec des alternances de faible course pour entraîner le déplacement par sauts des supports adjacents à chacun desdits boîtiers.

12. Installation pour la culture hors sol selon la revendication 1 **caractérisée en ce que** lesdits supports comportent un marquage individuel et **en ce que** ladite installation comporte des moyens de lecture desdits marquages et de commande du fonctionnement en fonction des données acquises lors de l'étape de lecture.

13. Support mobile pour une installation conforme à la revendication 1, ladite installation pour la culture hors sol constituée par un bâti supportant une pluralité de profilés (10, 20, 30) s'étendant parallèlement dans un plan horizontal, depuis une zone transversale de chargement jusqu'à une zone transversale de récolte et par une pluralité de supports apte à recevoir un substrat de culture, lesdits supports (10, 20, 30) étant mobiles longitudinalement dans l'interstice longitudinal (15, 25) défini par deux profilés adjacents (10, 20), les supports (100) étant entraînés par un moyen motorisé susceptible de modifier l'écartement de supports (100, 200) consécutifs pendant la course dans ledit interstice (15) **caractérisé en ce qu'**il présente, dans des plans transversaux verticaux avant et arrière, des fentes arquées, de part et d'autre du plan vertical longitudinal et s'étendant depuis un bord latéral selon une direction formant un angle compris entre 0 et 30° par rapport au plan horizontal, jusqu'à un bord inférieur selon une direction formant un angle compris entre 0 et 30° avec le plan médian vertical, les deux fentes se rejoignant au niveau de leur bord inférieur.

14. Support mobile selon la revendication précédente **caractérisé en ce qu'**il présente des patins latéraux, de part et d'autre du plan vertical médian, la surface inférieure desdits patins étant destinée à glisser sur la surface supérieure desdits profilés.

15. Support mobile selon la revendication 13 **caractérisé en ce qu'**il présente un logement pour recevoir un substrat de culture, ledit logement débouchant au niveau de la face supérieure et de la face inférieure dudit support mobile.

16. Support mobile selon la revendication précédente **caractérisé en ce que** ledit logement présente des moyens pour modifier l'interaction avec le boîtier d'entrainement en fonction de la présence ou non du substrat de culture.

17. Support mobile selon la revendication 15 **caractérisé en ce que** ledit logement présente des zones d'appui contre la paroi dudit substrat de culture, et des zones définissant un espace de circulation d'air entre le support et la surface dudit substrat de culture.

18. Support mobile selon la revendication 13 **caractérisé en ce qu'**il comporte un marquage individuel.

19. Support mobile selon la revendication 13 **caractérisé en ce qu'**il est constitué de deux coques complémentaires, la coque supérieure présentant un logement pour recevoir le substrat de culture, la coque inférieure présentant des moyens pour déformer les bandes de jointure entre, en avant et en arrière dudit support, une position où les bords inférieurs desdites bandes se rejoignent et, au niveau dudit support, une position où les bords inférieurs desdites bandes s'écartent pour libérer un espace de passage du logement du substrat et des racines de la plante.

20. Support mobile selon la revendication précédente caractérisé en ce ledit logement pour recevoir le substrat s'ouvre par une fente pour faciliter le retrait de la plante par un déplacement dans le plan longitudinale pour la sortie dudit logement, puis un déplacement vertical pour la retirer de la coque supérieure.

21. Support mobile selon la revendication 13 **caractérisé en ce qu'**il est configuré pour présenter une base stable apte à assurer le transport d'une salade après la sortie de ligne sur une bande de convoyage et jusqu'à un poste de récolte centralisé.

## Patentansprüche

1. Anlage zum erdelosen Anbau, bestehend aus einem Rahmen, der mehrere Profile (10, 20, 30) trägt, die sich parallel in einer horizontalen Ebene von einer Querbelastungszone zu einer Quererntezone erstrecken, und aus mehreren Trägern, die jeweils ein Kultursubstrat aufnehmen können, wobei die Träger (10, 20, 30) in dem durch zwei benachbarte Profile (10, 20) definierten Längsspalt (15, 25) in Längsrichtung beweglich sind, wobei die Träger (100) durch ein motorisiertes Mittel angetrieben werden, das den Abstand zwischen zwei aufeinanderfolgenden Trägern (100, 200) während des Hubs in dem Spalt (15) modifizieren kann, **dadurch gekennzeichnet, dass** die Profile (10, 20) flexible, undurchsichtige, in Längsrichtung ausgerichtete seitliche Verbindungsstreifen (21, 22) aufweisen, wobei die Verbindungsstreifen (21, 22) von zwei benachbarten Profilen (10, 20) sich treffen, um das Schließen des durch die benachbarten Profile (10, 20) definierten Spaltes (15) sicherzustellen, und dass die beweglichen Träger (100, 200) in ihrem vorderen und hinteren Querschnitt bogenförmige Schlitze auf beiden Seiten einer vertikalen Längsebene aufweisen, wobei sich die beiden Schlitze an ihrer Unterkante treffen.

2. Anlage zum erdelosen Anbau nach Anspruch 1, **dadurch gekennzeichnet, dass** sich die Schlitze von der Seitenkante in einer Richtung, die einen Winkel zwischen 0 und 30° zur horizontalen Ebene bildet, bis zur Unterkante in einer Richtung, die einen Winkel zwischen 0 und 30° mit der vertikalen Mittelebene bildet, erstrecken.

3. Anlage zum erdelosen Anbau nach Anspruch 1, **dadurch gekennzeichnet, dass** die Unterkante der Verbindungsstreifen ein magnetisches Verschlussmittel aufweist.

4. Anlage zum erdelosen Anbau nach Anspruch 1, **dadurch gekennzeichnet, dass** das Profil (10, 20) eine zentrale Längszone (14) aufweist, die auf beiden Seiten durch Längsschultern begrenzt ist, wobei die Träger auf beiden Seiten der mittleren vertikalen Längsebene Verlängerungen aufweisen, die einen Längskanal des Abschnitts definieren, der zu dem Abschnitt der Längsschultern komplementär ist.

5. Anlage zum erdelosen Anbau nach Anspruch 1, **dadurch gekennzeichnet, dass** jedes Profil (10) die Führung eines Antriebsgehäuses (1000), das Kopplungsmittel (1010, 1020) mit den benachbarten beweglichen Trägern (100, 200) aufweist, gewährleistet, wobei jedes der Gehäuse (1000) durch einen Riemen (1100) bewegt wird, der sich entlang des entsprechenden Profils (10) erstreckt.

6. Anlage zum erdelosen Anbau nach Anspruch 1, **dadurch gekennzeichnet, dass** der bewegliche Träger auf beiden Seiten der vertikalen Mittelebene seitliche Kufen (116) aufweist, wobei die Unterseite der Kufen (116) auf der Oberseite der Profile (10) gleiten soll.

7. Anlage zum erdelosen Anbau nach Anspruch 1, **dadurch gekennzeichnet, dass** jedes Profil (10) eine mittlere Längsrippe (14) zur Aufnahme eines Riemens (1100) und des zugehörigen Antriebsgehäuses (1000) aufweist und dass die Kopplungsmittel aus einziehbaren Fingern (1010, 1020) zusammengesetzt sind, die mit einer Schulter (118) in Kontakt kommen, die an der Seitenwand (114) der beweglichen Träger vorgesehen ist.

8. Anlage zum erdelosen Anbau nach dem vorhergehenden Anspruch, **dadurch gekennzeichnet, dass** die einziehbaren Finger (1010, 1020) so konfiguriert sind, dass sie in die zurückgezogene Position zurückgeschoben werden, wenn sie während einer Bewegung in Richtung der Ladezone der Anlage mit der Wand eines Trägers in Kontakt kommen.

9. Anlage zum erdelosen Anbau nach Anspruch 7 oder 8, **dadurch gekennzeichnet, dass** die Antriebsgehäuse ein Hemmelement (1030, 1040) aufweisen, das die Finger (1010, 1020) des Bewegungsgehäuses (1000) in der zurückgezogenen Position blockiert, wenn das Hemmelement mit einem in der Ladezone befindlichen Anschlag in Kontakt kommt, und die Finger (1010, 1020) freigibt, wenn das Hemmelement mit einem in der Erntezone befindlichen Anschlag in Kontakt kommt.

10. Anlage zum erdelosen Anbau nach Anspruch 1, **dadurch gekennzeichnet, dass** sie ladezonenseitig eine erste motorisierte Achse, die für jedes Profil eine Trommel zum Aufwickeln eines Riemens antreibt, dessen entgegengesetztes Ende am Antriebsgehäuse befestigt ist, und erntezonenseitig eine zweite motorisierte Achse umfasst, die für jedes Profil eine Trommel zum Aufwickeln eines Riemens antreibt, dessen entgegengesetztes Ende an dem Antriebsgehäuse befestigt ist.

11. Anlage zum erdelosen Anbau nach dem vorstehenden Anspruch, **dadurch gekennzeichnet, dass** sie einen Rechner zur sequentiellen Steuerung der Bewegung der motorisierten Achsen umfasst, um die Antriebsgehäuse während eines Anbauzyklus von der Quererntezone bis zur Querladezone mit Wechseln kurzen Hubs zu bewegen, um die Bewegung durch Sprünge der Träger neben jedem der Gehäuse zu bewirken.

12. Anlage zum erdelosen Anbau nach Anspruch 1, **dadurch gekennzeichnet, dass** die Träger eine individuelle Kennzeichnung aufweisen und dass die Anlage Mittel zum Lesen der Markierungen und zum Steuern des Betriebs gemäß den während des Leseschritts erfassten Daten umfasst.

13. Beweglicher Träger für eine Anlage nach Anspruch 1, wobei die Anlage für den erdelosen Anbau aus einem Rahmen, der mehrere Profile (10, 20, 30) trägt, die sich parallel in einer horizontalen Ebene von einer Querladezone zu einer Quererntezone erstrecken, und aus mehreren Trägern besteht, die zum Aufnehmen eines Kultursubstrats geeignet sind, wobei die Träger (10, 20, 30) in dem durch zwei benachbarte Profile (10, 20) definierten Längsspalt (15, 25) in Längsrichtung beweglich sind, wobei die Träger (100) durch ein motorisiertes Mittel angetrieben werden, das in der Lage ist, den Abstand aufeinanderfolgender Träger (100, 200) während des Hubs in dem Spalt (15) zu modifizieren, **dadurch gekennzeichnet, dass** er in der vorderen und hinteren vertikalen Querebene bogenförmige Schlitze auf beiden Seiten der vertikalen Längsebene aufweist und sich von einer Seitenkante in einer Richtung, die einen Winkel zwischen 0 und 30° zur horizontalen Ebene bildet, bis zu einer Unterkante in einer Richtung, die mit der vertikalen Mittelebene einen Winkel zwischen 0 und 30° bildet, erstreckt, wobei sich die beiden Schlitze an ihrer Unterkante treffen.

14. Beweglicher Träger nach dem vorhergehenden Anspruch, **dadurch gekennzeichnet, dass** er seitliche Kufen auf jeder Seite der vertikalen Mittelebene aufweist, wobei die Unterseite der Kufen auf der Oberseite der Profile gleiten soll.

15. Beweglicher Träger nach Anspruch 13, **dadurch gekennzeichnet, dass** er eine Aufnahme zum Aufnehmen eines Kultursubstrats aufweist, wobei die Aufnahme in Höhe der Oberseite und der Unterseite des beweglichen Trägers mündet.

16. Beweglicher Träger nach dem vorhergehenden Anspruch, **dadurch gekennzeichnet, dass** die Aufnahme Mittel zum Modifizieren der Wechselwirkung mit dem Antriebsgehäuse in Abhängigkeit von der Anwesenheit oder Abwesenheit des Kultursubstrats aufweist.

17. Beweglicher Träger nach Anspruch 15, **dadurch gekennzeichnet, dass** die Aufnahme Zonen zum Stützen gegen die Wand des Kultursubstrats und Zonen, die einen Luftzirkulationsraum zwischen dem Träger und der Oberfläche des Kultursubstrats definieren, aufweist.

18. Beweglicher Träger nach Anspruch 13, **dadurch gekennzeichnet, dass** er eine individuelle Kennzeichnung umfasst.

19. Beweglicher Träger nach Anspruch 13, **dadurch gekennzeichnet, dass** er aus zwei komplementären Schalen besteht, wobei die obere Schale eine Aufnahme zum Aufnehmen des Kultursubstrats aufweist, wobei die untere Schale Mittel zum Verformen der Verbindungsstreifen vorwärts und rückwärts des Trägers zwischen einer Position, an der sich die Unterkanten der Streifen treffen, und, am Träger, einer Position, an der sich die Unterkanten der Streifen auseinander bewegen, um einen Durchgangsraum für die Aufnahme des Substrats und die Wurzeln der Pflanze freizugeben, aufweist.

20. Beweglicher Träger nach dem vorhergehenden Anspruch, **dadurch gekennzeichnet, dass** sich die Aufnahme zum Aufnehmen des Substrats durch einen Schlitz öffnet, um das Entnehmen der Pflanze durch eine Bewegung in der Längsebene zum Herausholen aus der Aufnahme zu erleichtern, dann eine vertikale Bewegung, um sie aus der oberen Schale zu entnehmen.

21. Beweglicher Träger nach Anspruch 13, **dadurch gekennzeichnet, dass** er so konfiguriert ist, dass er eine stabile Basis darstellt, die die Beförderung eines Salats nach dem Verlassen der Linie auf einem Förderband und bis zu einer zentralen Erntestation sicherstellen kann.

## Claims

1. Soilless cultivation facility composed of a frame supporting a plurality of profile sections (10, 20, 30) that extend in parallel in a horizontal plane from a transverse loading zone to a transverse harvesting zone, and of a plurality of supports each suitable for receiving a cultivation substrate, said supports (10, 20, 30) being movable longitudinally in the longitudinal gap (15, 25) defined by two adjacent profile sections (10, 20), the supports (100) being driven by a motorized means capable of changing the distance between two consecutive supports (100, 200) during the stroke in said gap (15), **characterized in that** said profile sections (10, 20) have flexible and opaque longitudinal side joining strips (21, 22), the joining strips (21, 22) of two adjacent profile sections (10, 20) meeting so as to close the gap (15) defined by said adjacent profile sections (10, 20), and **in that** said movable supports (100, 200) have, in their front and rear cross sections, arcuate slots on either side of a longitudinal vertical plane, the two slots meeting at their lower edge.

2. Soilless cultivation facility according to claim 1, **characterized in that** said slots extend from the side edge in a direction forming an angle of between 0 and 30° with respect to the horizontal plane, to the lower edge in a direction forming an angle of between 0 and 30° with the vertical median plane.

3. Soilless cultivation facility according to claim 1, **characterized in that** the lower edge of the joining strips has a magnetic closure means.

4. Soilless cultivation facility according to claim 1, **characterized in that** said profile section (10, 20) has a central longitudinal zone (14) that is delimited on either side by longitudinal shoulders, said supports having, on either side of the median vertical longitudinal plane, extensions that define a longitudinal channel having a cross section that matches the cross section of said longitudinal shoulders.

5. Soilless cultivation facility according to claim 1, **characterized in that** each profile section (10) guides a drive unit (1000) having means (1010, 1020) for coupling to the adjacent movable supports (100, 200), each of said units (1000) being moved by a belt (1100) extending along the corresponding profile section (10).

6. Soilless cultivation facility according to claim 1, **characterized in that** said movable support has side pads (116) on either side of the median vertical plane, the lower surface of said pads (116) being intended to slide on the upper surface of said profile sections (10).

7. Soilless cultivation facility according to claim 1, **characterized in that** each profile section (10) has a median longitudinal rib (14) for receiving a strap (1100) and the associated drive unit (1000), and **in that** said coupling means are composed of retractable fingers (1010, 1020) that come into contact with a shoulder (118) provided on the side wall (114) of said movable supports.

8. Soilless cultivation facility according to the preceding claim, **characterized in that** said retractable fingers (1010, 1020) are designed to be pushed back into the withdrawn position when they come into contact with the wall of a support during movement toward the loading zone of the facility.

9. Soilless cultivation facility according to either claim 7 or claim 8, **characterized in that** said drive units comprise an inhibiting member (1030, 1040) that locks the fingers (1010, 1020) of the movement unit (1000) in the withdrawn position when said inhibiting member comes into contact with an abutment located in the loading zone, and releases said fingers (1010, 1020) when said inhibiting member comes into contact with an abutment located in the harvesting zone.

10. Soilless cultivation facility according to claim 1, **characterized in that** it includes, on the loading zone side, a first motorized axle that drives, for each profile section, a drum for winding a strap of which the opposite end is secured to the drive unit, and, on the harvesting zone side, a second motorized axle that drives, for each profile section, a winding drum of a strap of which the opposite end is secured to the drive unit.

11. Soilless cultivation facility according to the preceding claim, **characterized in that** it comprises a computer for controlling the movement of the motorized axles sequentially in order to move, during a cultivation cycle, the drive units from the transverse harvesting zone to the transverse loading zone, with alternating short strokes to cause the supports adjacent to each of said units to move by jumps.

12. Soilless cultivation facility according to claim 1, **characterized in that** said supports comprise an individual marking and **in that** said facility comprises means for reading said markings and for controlling the operation according to the data acquired during the reading step.

13. Movable support for a facility according to claim 1, said soilless cultivation facility being composed of a frame supporting a plurality of profile sections (10, 20, 30) that extend in parallel in a horizontal plane from a transverse loading zone to a transverse harvesting zone, and of a plurality of supports suitable for receiving a cultivation substrate, said supports (10, 20, 30) being movable longitudinally in the longitudinal gap (15, 25) defined by two adjacent profile sections (10, 20), the supports (100) being driven by a motorized means capable of changing the spacing of consecutive supports (100, 200) during the stroke in said gap (15), **characterized in that** said movable support has, in front and rear vertical transverse planes, arcuate slots on either side of the longitudinal vertical plane which extend from a side edge in a direction forming an angle of between 0 and 30° with respect to the horizontal plane, to a lower edge in a direction forming an angle of between 0 and 30° with the vertical median plane, the two slots meeting at their lower edge.

14. Movable support according to the preceding claim, **characterized in that** it has side pads on either side of the vertical median plane, the lower surface of said pads being intended to slide on the upper surface of said profile sections.

15. Movable support according to claim 13, **characterized in that** it has a cavity for receiving a cultivation substrate, said cavity being open at the upper face and at the lower face of said movable support.

16. Movable support according to the preceding claim, **characterized in that** said cavity has means for changing the interaction with the drive unit according to the presence or absence of the cultivation substrate.

17. Movable support according to claim 15, **characterized in that** said cavity has zones for bearing against the wall of said cultivation substrate, and zones defining an air circulation space between the support and the surface of said cultivation substrate.

18. Movable support according to claim 13, **characterized in that** it comprises an individual marking.

19. Movable support according to claim 13, **characterized in that** it is composed of two complementary shells, the upper shell having a cavity for receiving the cultivation substrate, the lower shell having means for deforming the joining strips between a position, in front of and behind said support, where the lower edges of said strips meet and a position, at said support, where the lower edges of said strips move apart to free up a space through which the cavity for the substrate and the roots of the plant can pass.

20. Movable support according to the preceding claim, **characterized in that** said cavity for receiving the substrate opens through a slot to facilitate the removal of the plant by a movement in the longitudinal plane in order to for said plant to leave said cavity, then a vertical movement in order to remove said plant from the upper shell.

21. Movable support according to claim 13, **characterized in that** it is designed to have a stable base suitable for transporting salad after leaving the line on a conveyor belt and for transporting said salad to a centralized harvesting station.
